(19) Europäisches Patentamt
European Patent Office
Office européen des brevets

(11) **EP 4 492 505 A1**

(12) **EUROPEAN PATENT APPLICATION**

(43) Date of publication:
**15.01.2025 Bulletin 2025/03**

(51) International Patent Classification (IPC):
*H01M 4/86* (2006.01)    *H01M 4/88* (2006.01)
*H01M 4/90* (2006.01)    *H01M 8/12* (2016.01)

(21) Application number: **23182775.9**

(22) Date of filing: **30.06.2023**

(52) Cooperative Patent Classification (CPC):
**H01M 4/8652; H01M 4/8846; H01M 4/90;**
H01M 2008/1293

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2023 PT 2023118769**

(71) Applicant: **Universidade de Aveiro**
**3810-193 Aveiro (PT)**

(72) Inventors:
• **Paul Fagg, Duncan**
**3810-193 AVEIRO (PT)**
• **Almeida Loureiro, Francisco José**
**3810-193 AVEIRO (PT)**
• **Diniz Graça, Vanessa**
**3810-193 AVEIRO (PT)**
• **Vilas Holz, Laura Isabel**
**3810-193 AVEIRO (PT)**

(74) Representative: **Patentree**
**Edificio Net**
**Rua de Salazares, 842**
**4149-002 Porto (PT)**

(54) **MEMBRANE ELECTRODE ASSEMBLY AND ITS METHOD OF OBTENTION**

(57)    The present disclosure relates to a membrane electrode assembly, and his method for fabrication.

It is disclosed a ceramic porous electrode for a membrane electrode assembly comprising a metal(oxy)nitride impregnated on the electrode structure.

Fig. 4

**Description**

**TECHNICAL FIELD**

The present disclosure relates to a membrane electrode assembly and its method of obtention.

**BACKGROUND**

Proton ceramic electrochemical cells are composed of a ceramic proton conducting electrolyte membrane and two adjacent electrodes, where this repeat unit is called a membrane electrode assembly (MEA). The ceramic membrane of the MEA allows the separation of gaseous reactants at the electrode sides, being permeable only to protons, i.e. $H^+$ species.

A Proton Ceramic Fuel Cell (PCFC), created by single or repeat units of the MEA, performs the electrochemical oxidation of a fuel to directly produce electricity and heat.

The inverse operation can also be performed where the application of an external electrical current to single or repeat units of the MEA can generate fuels by the electrochemical reduction of gaseous species. In this mode of operation, the device is designated as a Proton Ceramic Electrolyser Cell (PCEC).

Current limitations of both the PCFC and PCEC technologies are to find suitable electrode materials which can operate in the specific working atmospheres of each respective device, PCFC or PCEC.

Doped barium cerates or zirconates are amongst the most promising proton conducting electrolytes ceramic materials for application in potential proton ceramic fuel cell / electrolyser applications.[1-4] These materials belong to the perovskite family of $ABO_3$ ceramic oxide structure. Such structure includes a divalent alkaline earth element, such as $Ba^{2+}$, but also, $Sr^{2+}$ or $Ca^{2+}$, in the A-cation site, while a tetravalent rare-earth element, usually $Ce^{4+}$ or $Zr^{4+}$, is present in the B-cation site. These materials are capable of offering both protonic and oxygen-ion conductivity, and even electronic conductivity as well, at high temperatures. Such conductivity is assured when the B-site is partially substituted with suitable acceptor elements, such as $Y^{3+}$, $In^{+3}$ or $Gd^{3+}$ trivalent cations, leading to the formation of charge compensating oxygen vacancies, according to eq. 1.

Yttrium-doped barium cerate, $BaCe_{1-x}Y_xO_{3-\delta}$ (BCY), is reported as one of the ceramic materials exhibiting best performance in terms of protonic conductivity at the lowest temperatures.[5-7] Proton conductivity arises due to the incorporation of protonic defects in the presence of water, as expressed in eq. 2.[1-4] According to the following *Kroger-Vink* notation:

$$Ce_{Ce}^x + \frac{1}{2}O_O^x + \frac{1}{2}Y_2O_3 \Rightarrow Y_{Ce}' + \frac{1}{2}V_O^{\bullet\bullet} + CeO_2 \qquad [Eq.\ 1]$$

$$H_2O + V_O^{\bullet\bullet} + O_O^x \Leftrightarrow 2OH_O^{\bullet} \qquad [Eq.\ 2]$$

The current literature obtained with such ceramic proton conductors highlights total protonic conductivity values in the order of $10^{-2}$ to $10^{-4}$ $Scm^{-1}$ at 400°C in hydrogen atmosphere. Despite the good performance of doped barium cerates, they have the drawback of reacting with acidic gases, viz. $CO_2$ and water vapour, e.g., with respect to carbonate or hydroxide formation, respectively. This instability of BCY has, up to now, prevented exploitation of these materials as electrolytes for the referred applications, especially in non-hydrogen fuels, or in $CO_2$ containing atmospheres, when these atmospheres contain significant amounts of water vapour [5-12].

Conversely, doped barium zirconate, e.g. $BaZr_{1-x}Y_xO_{3-\delta}$ (BZY), offers much higher chemical stability under $CO_2$ or $H_2O$ containing atmosphere, but with the disadvantages that they show lower electrical conductivity, and require high sintering temperatures and long annealing times, complicating cell fabrication. Due to these differences between the cerate and zirconate materials, it has been shown that upon adjustment of the Ce:Zr ratio, one can achieve a compromise between the achievement of chemical and mechanical stability, while still retaining adequate conductivity for practical applications in the temperature range 550-700°C. This is the case of the well-known yttrium-doped barium cerate zirconate, $Ba(Ce,Zr)_{1-y}Y_yO_{3-\delta}$ (BCZY) [5,13-15].

To make suitable PCFC or PCEC electrodes, materials that offer electrocatalytic activity for the electrode reaction, electronic conduction required for charge transfer reactions and current collection, and chemical and thermal compatibility with the proton ceramic cell components are required [16]. Typical electrode materials are those of metals, e.g. Ni, Cu, Co, Ag, Au, or their combinations, or other ceramic oxide materials, from perovskite or perovskite related structural families [17]. Composite electrodes can also be formed from one of the aforementioned electrode materials combined with a proton conducting ceramic material, e.g. BZY, BCY or BCZY, or their derivatives with other acceptor elements, such as $In^{+3}$ or $Gd^{3+}$ trivalent cations.

More recently, transition metal nitrides and oxynitrides have also been suggested for this role as electrodes for PCFC and PCEC devices, either as single electrolyte phases or in combination with the aforementioned proton ceramic materials to make a metal nitride or metal oxynitride- proton ceramic composite electrodes [18].

Transition metal nitrides have become widely popular in several applications, including, as potential electro-catalysts, antibacterial agents, superconducting materials, coatings, amongst others [19,20].

Transition metal nitrides (TMNs) are very interesting materials exhibiting a combination of outstanding properties. They have exceptional mechanical properties, high melting points, high electrical conductivity, refractory character and chemical stability in hostile reducing environments [21]. For this reason, they have recently received increasing interest for use in a wide variety of applications, with great potential shown in electrochemical energy conversion, storage and in the heterogeneous catalysis fields [19].

The base nitride materials can also incorporate oxygen in their anionic sublattice to form oxynitrides, giving rise to an additional dimension in which to tailor their properties for potential applications [22], whilst further extending their compositional complexity.

In this the present disclosure, we consider that this flexibility of the metal nitride to also contain oxygen is represented by the global terminology "metal (oxy)nitride" materials, where this term encompasses compositional variations between the pure metal nitride and that of oxynitride compositions.

These facts are disclosed in order to illustrate the technical problem addressed by the present disclosure.

**GENERAL DESCRIPTION**

The present disclosure relates to a membrane electrode assembly and its method of obtention.

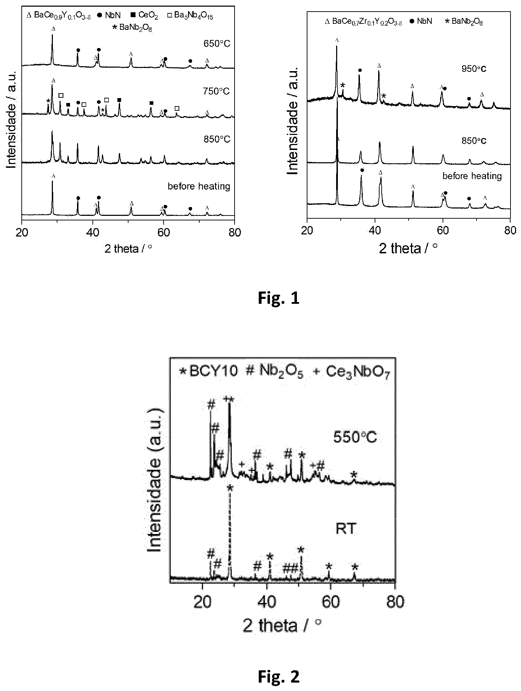

The technology described in this current invention intends to address the problem of producing and firmly affix a metal (oxy)nitride electrode phase during MEA fabrication for the PCFC and PCEC devices. This is a quite complex technical problem since the metal (oxy)nitride phase interreacts with the proton ceramic phase at low temperatures, as illustrated in Fig.1. One can observe from this figure that this factor is more serious for compositions with high Ce contents in the proton ceramic conducting phase. This interreaction with the proton ceramic phase is both problematic with respect to interreaction with the final (oxy)nitride composition, as well as for typical starting precursors for the preparation (oxy)nitride phase, such as typical transition metal oxides, as illustrated in Fig. 2. These factors are, thus, highly limiting for the formation of this type of metal (oxy)nitride containing MEA, as higher temperatures in excess of 800°C are usually used to make such assemblies, to ensure good adhesion of each layer [17]. Moreover, the much higher interreactivity shown between the metal (oxy)nitrides or metal oxides with the proton ceramic compositions of high Ce contents, limits the ability to form the most favourable composites for use at low temperatures; as these composites necessitate the highest levels of Ce content in the proton ceramic phase to offer the highest proton conductivity.

Therefore, the present disclosure seeks to provide the use of a new low temperature preparation method for the obtention of transition metal (oxy)nitride containing electrodes for use in in proton ceramic membrane electrode assemblies (MEAs) for fuel cells or electrolyser applications. Namely, the production of metal oxynitride or metal (oxy) nitride containing electrodes for use in MEAs for ceramic electrochemical reactors for the electrochemical oxidation or the production of fuels, respectively. The invention of the low temperature method avoids inter-reaction between the metal (oxy)nitride electrode and the proton ceramic components on MEA fabrication.

An aspect of the present disclosure involves a method for the obtention of metal (oxy)nitride or metal (oxy)nitride containing electrodes, comprising the direct conversion of a soluble transition metal oxalate precursor in the presence of a protonic ceramic material, to that of the corresponding binary combination of transition metal (oxy)nitride and proton ceramic phases by ammonolysis in a $NH_3$ containing gas at temperatures lower than or equal to 800°C.

In an embodiment, the protonic ceramic material comprises a material of composition $M_z(Ce_{1-x}Zr_x)_{1-y}R_yO_{3-\delta}$,

wherein M and R are independently selected from each other;

wherein M is a divalent alkaline earth element, such as $Ba^{2+}$, $Sr^{2+}$ or $Ca^{2+}$, or their combination;

wherein R is selected from a list consisting of $Y^{3+}$, $La^{3+}$, $Pr^{3+}$, $Nd^{3+}$, $Sm^{3+}$, $Eu^{3+}$, $Gd^{3+}$, $Dy^{3+}$, $Yb^{3+}$ or their combination;

x varies between 0 to 1;

y varies between 0 to 0.5;

z varies between 0.9 and 1;

$\delta$ ranges from 0 and 0.25.

An aspect of the present disclosure involves the use of a metal nitride or oxynitride, as a component of an electrode material of the MEA of the described electrochemical device,

wherein the metal (oxy)nitride material comprises $XO_\alpha N_\beta$;

wherein X is a transition metal element or combination of transition elements;

$\alpha$ ranges from 0 to 2;

$\beta$ ranges from 0.01 to 2.

An aspect of the of the present disclosure involves the use of soluble compounds containing a metal oxalate or a mixture of metal oxalates, as the precursor material for metal (oxy)nitride, formation, where the metal corresponds to that of a transition metal or mixtures of transition metals and where the ammonolysis technique is performed at temperatures equal to or below 800°C to convert the precursor compounds containing a metal oxalate or mixture of metal oxalates to the corresponding nitride or oxynitride phases, using an ammonia containing gas as the gaseous reacting precursor.

Oxalates (or International Union of Pure and Applied Chemistry terminology: ethanedioate) are compounds containing an anion with the formula $C_2O_4{}^{2-}$. Transition metal oxalates have the potential of forming several compounds due to their high coordination capacity, this, forming a variety of structural forms with different coordination of $C_2O_4{}^{2-}$ groups [23,24]. These transition metal oxalates typically have low cost and do not suffer from disadvantages of more common precursors for metal (oxy)nitride formation [23], like metal oxides, halides, alkoxides or nitrates, such as slow kinetics necessitating high temperatures for their conversion to nitrides, strongly acidic fumes on their decomposition, moisture sensitivity or retention of unwanted anion components in the final product.

The use of oxalates for (oxy)nitride formation has not received much attention. The following works represent those closest to the theme of the current disclosure. Tantalum nitride (TasNs) was shown to be synthesized by ammonization using a so-called water-soluble tantalum oxalate precursor at 800°C in flowing ammonia [25]. However, the exact precursor of this article was characterised by x-ray diffraction and was documented to be "mainly composed of ammonium oxalate and amorphous tantalum oxide" [25], i.e. a precursor that does not contain a metal oxalate compound, as required in the current patent, being instead that of a phase mixture between a non-metal oxalate (ammonium oxalate) and a metal oxide.

Hexagonal niobium nitride was shown to be able to be synthesised using a tris(oxalate) ammonium precursor by direct high temperature reaction at 1100°C with a flowing gas mixture of $N_2$ and Hz[23]. The gas mixture used was that of $H_2$ and $N_2$ in the proportions of 60% (v/v) and 40% (v/v) respectively. This gas differs from the current patent where the use of an $NH_3$ containing gas is required as the reacting gaseous precursor. This is because the use of the published gas mixture of $H_2$ and $N_2$ necessitates a much higher operating temperature (e.g. 1100°C) than that of the current process (less than or equal to 800°C), thereby negating its use with the aforementioned proton ceramic materials in MEA formation due to interreaction of components upon MEA formation.

It is disclosed a ceramic porous electrode for a membrane electrode assembly comprising a metal(oxy)nitride impregnated on the electrode structure.

It is also disclosed a membrane electrode assembly comprising the disclosed ceramic porous electrode.

In an embodiment, the membrane electrode assembly comprises a protonic ceramic material, preferably a protonic ceramic material comprising a material of composition $M_z(Ce_{1-x}Zr_x)_{1-y}R_yO_{3-\delta}$, wherein M and R are independently selected from each other; wherein M is a divalent alkaline earth element, such as $Ba^{2+}$, $Sr^{2+}$ or $Ca^{2+}$, or their combination; wherein R is selected from a list consisting of $Y^{3+}$, $La^{3+}$, $Pr^{3+}$, $Nd^{3+}$, $Sm^{3+}$, $Eu^{3+}$, $Gd^{3+}$, $Dy^{3+}$, $Yb^{3+}$ or their combination; x ranges from 0 to 1; y ranges from 0 to 0.5; z ranges from 0.9 and 1; $\delta$ ranges from 0 and 0.25.

In an embodiment, the protonic ceramic material used in the membrane electrode assembly comprises sintering additives of nickel, zinc, cobalt or copper oxides at concentrations less than or equal to 5 mol%.

In an embodiment, the membrane electrode assembly according to the previous claims 2 to 4, wherein is combined with the transition metal(oxy)nitride.

In an embodiment, the protonic ceramic material used in the membrane electrode assembly is in form of a powder, preferably with a particle size from 100nm to $2\mu m$, more preferably from $0.5\mu m$ to $1\mu m$.

In an embodiment, the metal(oxy)nitride used in the membrane electrode assembly is used for the electrochemical oxygen reduction reaction, water splitting reaction, or nitrogen reduction reaction.

It is also disclosed a method for the fabrication of a membrane electrode assembly containing the metal(oxy) nitride component comprising the following steps: preparing an electrode skeleton on top of a protonic ceramic material substrate; infiltering a solution of a transition metal oxalate precursor into the electrode skeleton obtained in the previous step; in situ formation of the metal(oxy)nitride phase through a ammonolysis process under a continuous flow of ammonia gas at temperatures lower than or equal to 800°C.

In an embodiment, the protonic ceramic material used in the method is obtained by acetate combustion routes followed by a uniaxial and isostatic pressing and a sintering step with a ramp rate of 3°C/min.

In an embodiment, the protonic ceramic substrate of the method is compacted by a uniaxial and isostatic pressing and a sintering step with a ramp rate of 3°C/min, performed for 8-12h at a temperature of 1300 to 1500°C.

In an embodiment, the proton ceramic material is used to form the electrode skeleton of the method by its deposition on the protonic ceramic substrate followed by a sintering step with a ramp rate of 3°C/min performed for 8-12h at a temperature of 800 to 1200°C.

In an embodiment, the ammonolysis process of the method is performed by heating the infiltrated sample obtained in a tubular furnace under a continuous flow of ammonia gas at 650°C for 24h.

In an embodiment, the transition metal oxalate precursor used in the method comprises a material of composition $XO_\alpha N_\beta$ wherein X is a transition metal element or combination of transition elements, $\alpha$ ranges from 0 to 2 and $\beta$ ranges from 0.01 to 2.

In an embodiment, the soluble transition metal oxalate precursor used in the method comprises a metal oxalate or mixture of metal oxalates, which is converted to the corresponding nitride or oxynitride phases, using an ammonia containing gas as the gaseous reacting precursor.

In an embodiment, the soluble transition metal oxalate precursor used in the method is an ammonium transition metal oxalate or mixture of ammonium transition metal oxalates, where these ammonium transition metal oxalate compounds are mono, bis or tris(oxalate) compounds.

In an embodiment, the ammonolysis reaction temperature used in the method is from 550°C to 800°C, preferably from 550°C to 650°C.

## BRIEF DESCRIPTION OF THE DRAWINGS

The following figures provide preferred embodiments for illustrating the disclosure and should not be seen as limiting the scope of invention.

**Figure 1:** Graphic representation of the interreaction between typical transition metal nitrides with the proton ceramic components, preventing the traditional high temperature ammonolysis routes as a potential MEA synthesis route for this type of materials. Note this interreaction occurs at lower temperatures with higher Ce/Zr ratios in the proton ceramic.

**Figure 2:** Graphic representation of the interreaction between typical transition metal oxides with the proton ceramic components, preventing the traditional pre-application of oxides as a potential MEA synthesis route for this type of materials.

**Figure 3:** Graphic representation illustrates the phase integrity of the proton ceramic and transition metal (oxy)nitride material by the low temperature soluble transition metal oxalate synthesis route.

**Figure 4:** Graphic representation illustrates the morphology of the composite proton ceramic and transition metal (oxy)nitride electrode, deposited on a proton ceramic substrate, formed by the method of the current disclosure.

**Figure 5:** Schematic representation of the electrochemical performance of the formed transition metal (oxy)nitride and proton ceramic composite electrode formed by the synthesis route of the current patent for the ammonia oxidation reaction.

**Figure 6:** Graphic representation illustrates the schematic representation of typical preparation route for MEAs containing transition metal (oxy)nitride materials with the proton ceramic components.

## DETAILED DESCRIPTION

The present disclosure relates to a membrane electrode assembly and its method of obtention.

One of the leading potential applications for transition metal (oxy)nitrides is as candidates to substitute noble-metal-based catalysts in a variety of catalytic processes [26], as catalysts or electrocatalysts in a wide range of different electrochemical and photochemical processes, such as the, oxygen reduction reaction (ORR) [27], water splitting reaction [28,29] nitrogen reduction reaction (NRR) [30-32] as well as for use in energy storage-applications [33,34].

Metal (oxy)nitrides can be readily produced by the ammonolysis route, which can be described as the thermal treatment of metal-based precursors, i.e, $Nb_2O_5$, $NbCl_5$ at high temperatures under a flow of ammonia ($NH_3$) [35], with the experimental parameters utilized during this synthesis route having great impact on the final (oxy)nitride composition.

Among these experimental variables, temperature, dwell time, heating/cooling rates and flow rate of $NH_3$ are reported to be key parameters that can introduce significant variations of the final stoichiometry.

The following text provides preferred embodiments for illustrating the description and should not be seen as limiting the scope of invention.

In an embodiment, a suitable MEA will be created consisting of a proton ceramic electrolyte of high Ce content and a deposited working electrode of niobium (oxy)nitride, for the potential application of a PCFC working in ammonia fuel.

In an embodiment, the $BaCe_{0.9}Y_{0.1}O_{3-\delta}$ (BCY10) powder was prepared by acetate combustion routes, as described in the prior art. The dense $BaCe_{0.9}Y_{0.1}O_{3-\delta}$ (BCY10) electrolyte is prepared by pelletizing the BCY10 powder by uniaxial and isostatic pressing (350 MPa, 15 min) followed by a sintering step at 1450°C, 10h, with ramp rate of 3°C/min.

In an embodiment, a $BaCe_{0.9}Y_{0.1}O_{3-\delta}$ (BCY10) electrode skeleton is prepared on the sintered BCY10 electrolyte substrate by depositing a screen-printed layer on one of the faces of the BCY10 electrolyte. To start, 0.155 g of BCY10 powder was combined with 10wt% of rice starch powder and ball milled in ethanol at 250 rpm for 2h, with subsequent drying. The electrode skeleton screen-printing slurry was then prepared by mixing the resultant powder mixture (20 vol%) with 0.095 g of terpineol (80 vol%) and 0.008 g of stearic acid in an agate mortar. The subsequent screen-printed electrolyte/electrode skeleton structure was calcined in air at 500°C for 2 h to evaporate organics, followed by sintering at 950°C for 4 h to firmly affix the porous BCY10 electrode skeleton to the BCY10 electrode substrate.

In an embodiment, a solution of $0.01 g/cm^3$ of ammonium niobium oxalate ($C_4H_4NNbO_9 \cdot xHzO$, of purity 99.99%) was then prepared using a 1:4 ratio of $H_2O$: $C_2H_5OH$ as the solvent. A clear final solution was obtained. This solution was infiltrated by a drop method into the porous BCY10 electrode skeleton. After each infiltration the sample was placed under vacuum and calcined at 100°C for 15 minutes.

In an embodiment, the formation of the metal(oxy)nitride phase was formed directly from infiltrated ammonium niobium oxalate precursor by ammonolysis. Ammonolysis was performed by heating the infiltrated sample obtained in a tubular furnace under a continuous flow of ammonia gas (purity 99.9%) at 650°C for 24h. After cooling, the obtained sample was passivated under a flow of nitrogen (purity 99.9%) for a period of 20 minutes at room temperature.

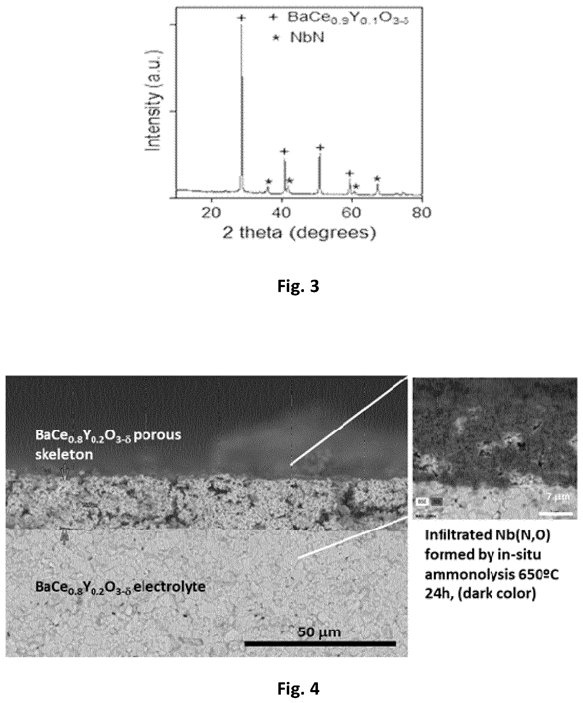

In an embodiment, the resultant electrode phase was characterised by grazing angle X-ray diffraction (XRD) and is shown to consist only of pure BCY10 and niobium (oxy)nitride phases with no interreaction under the resolution of the XRD technique, Figure 3 and Figure 4 show a cross section of the formed niobium (oxy)nitrate / BCY10 composite electrode on the dense BCY10 electrolyte substrate. The composite electrode layer is shown to be uniform and to contain well distributed BCY10 and niobium (oxy)nitride components.

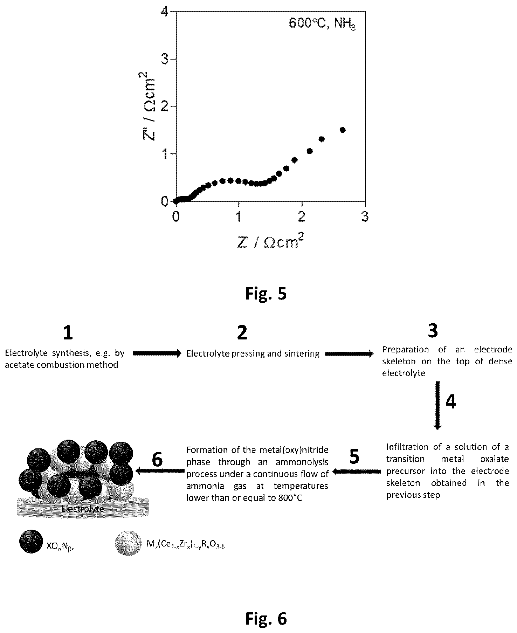

In an embodiment, silver counter and reference electrodes where painted on the reverse side of the BCY10 electrolyte, where the presence of the reference electrode allows to separate the response of the active niobium (oxy) nitride working electrode. The electrochemical performance of the working electrode, as a potential PCFC electrode to work in ammonia fuel, was tested by A.C. electrical impedance spectroscopy in flowing ammonia at 600°C, as illustrated in Fig.5 highlighting a good performance of the composite niobium(oxynitride)/BCY10 electrode for this application.

The technology described in this current invention intends to address the problem of producing and firmly affix a metal (oxy)nitride electrode phase during MEA fabrication for the PCFC and PCEC devices. This is a quite complex technical problem since the metal (oxy)nitride phase interreacts with the proton ceramic phase at low temperatures, as illustrated in Fig.1. One can observe from this figure that this factor is more serious for compositions with high Ce contents in the proton ceramic conducting phase. This interreaction with the proton ceramic phase is both problematic with respect to interreaction with the final (oxy)nitride composition, as well as for typical starting precursors for the preparation (oxy) nitride phase, such as typical transition metal oxides, as illustrated in Fig. 2. These factors are, thus, highly limiting for the formation of this type of metal (oxy)nitride containing MEA, as higher temperatures in excess of 800°C are usually used to make such assemblies, to ensure good adhesion of each layer [17]. Moreover, the much higher interreactivity shown between the metal (oxy)nitrides or metal oxides with the proton ceramic compositions of high Ce contents, limits the ability to form the most favourable composites for use at low temperatures; as these composites necessitate the highest levels of Ce content in the proton ceramic phase to offer the highest proton conductivity.

A further embodiment of the present disclosure involved the use of solely transition metal (oxy)nitride electrodes without the inclusion of a composite proton conducting electrode phase in any of the embodiments here stated.

Embodiments of the present disclosure involved the use of $M_z(Ce_{1-x}Zr_x)_{1-y}R_yO_{3-\delta}$ $BaCe_{1-x}M_xO_{3-\delta}$- based membrane compounds (where R=trivalent rare-earth elements, such as $Y^{3+}$, $La^{3+}$, $Pr^{3+}$, $Nd^{3+}$, $Sm^{3+}$, $Eu^{3+}$, $Gd^{3+}$, $Dy^{3+}$, $Yb^{3+}$), or their combination, and where M is a divalent alkaline earth element, such as $Ba^{2+}$, $Sr^{2+}$ or $Ca^{2+}$ or their combination for the proton ceramic MEA component/components, instead of that of BCY10, in any of the embodiments here stated. This included the use of the aforementioned proton ceramic materials, membrane, whose compositions includes all the possible conjugation of this these elements, with or without minor additions of other elements as possible sintering additives, e.g. minor additions of sintering additive such as Cu, Co, Ni or Zn or their compounds to the base proton ceramic compounds. These proton ceramic compounds were formed by standard routes available in the literature [2,15]. The remainder of the processing conditions were identical to those described in the initial embodiment, with the exception of slight adjustments in the sintering temperatures required to attain a dense electrolyte and well attached proton ceramic skeleton. These two variables were adjusted to temperatures between 1450°C to 1600°C, for the formation of a dense electrolyte, and 950-1200°C, for the formation of the skeleton, respectively, with higher values found to be necessary with increasing Zr content, between x = 0 and 1.

A further embodiment of the present disclosure involved the use of further soluble transition metal oxalate compounds. These precursors can be any soluble transition metal oxalate compound, consisting of a single metal oxalate or a mixture of metal oxalates, where the metal corresponds to that of a transition metal or mixtures of transition metals, and where the transition metal cation to oxalate anion ($C_2C_4{}^{2-}$) ratio can assume a variable coordination, typically between 1 and 3. As suitable examples of this embodiment, monohydrated ammonium oxotris(oxalate)niobate and monohydrated ammonium oxotris(oxalate)tantalate, $(NH_4)_3NbO(C_2O_4)_3.H_2O$ and $(NH_4)_3TaO(C_2O_4)_3.H_2O$, respectively, were formed as the starting soluble metal oxalate precursors. These precursors were formed as follows. Niobium pentoxide or Tantalum pentoxide ($NbzOs$, $Ta_2O_5$ purity 99.99%) was mixed with potassium hydrogen sulphate ($KHSO_4$, purity 99.5%) at a 1:15 molar ratio. This mixture was melted in a platinum crucible. After cooling, the material was ground and washed in an aqueous solution of hydrochloric acid during 24 hours. Subsequently, the material was filtered and washed with hot water. Hydrated niobium oxide is formed. This oxide is added to a solution of oxalic acid and ammonium oxalate (1:1 molar ratio) and the solution is slowly evaporated. To form the monohydrated ammonium oxotris(oxalate)niobate or tantalate the precipitate is dried at 70°C for 24 hours. The granulated material is further powdered in a mortar. These soluble metal oxalate precursor materials were then utilised as describe in the first embodiment to make the corresponding niobium or tantalite (oxy)nitride containing MEA.

Further embodiments of the present disclosure are the use of any the previous embodiments to prepare MEAs with transition metal (oxy)nitride electrodes for PCFC or PCEC devices where the electrochemical operation performed by the transition metal (oxy)nitride containing electrode is that of the oxygen reduction reaction (ORR), water splitting reaction, or nitrogen reduction reaction (NRR). These uses should not be seen in any way restricted to the embodiments here described and a person with ordinary skill in the art will foresee many possibilities to modifications thereof based on the usage of the metal (oxy)nitride containing electrodes here formed in proton ceramic electrochemical devices.

It is disclosed a ceramic porous electrode for a membrane electrode assembly comprising a metal(oxy)nitride impregnated on the electrode structure.

It is also disclosed a membrane electrode assembly comprising the disclosed ceramic porous electrode.

In an embodiment, the membrane electrode assembly comprises a protonic ceramic material, preferably a protonic ceramic material comprising a material of composition $M_z(Ce_{1-x}Zr_x)_{1-y}R_yO_{3-\delta}$, wherein M and R are independently selected from each other; wherein M is a divalent alkaline earth element, such as $Ba^{2+}$, $Sr^{2+}$ or $Ca^{2+}$, or their combination; wherein R is selected from a list consisting of $Y^{3+}$, $La^{3+}$, $Pr^{3+}$, $Nd^{3+}$, $Sm^{3+}$, $Eu^{3+}$, $Gd^{3+}$, $Dy^{3+}$, $Yb^{3+}$ or their combination; x ranges from 0 to 1; y ranges from 0 to 0.5; z ranges from 0.9 and 1; $\delta$ ranges from 0 and 0.25, for better results.

In an embodiment, the protonic ceramic material used in the membrane electrode assembly comprises sintering additives of nickel, zinc, cobalt or copper oxides at concentrations less than or equal to 5 mol%, for better results.

In an embodiment, the membrane electrode assembly is combined with the transition metal(oxy)nitride, for better results.

In an embodiment, the protonic ceramic material used in the membrane electrode assembly is in form of a powder, preferably with a particle size from 100nm to $2\mu m$, more preferably from $0.5\mu m$ to $\mu m$, for better results.

In an embodiment, the metal(oxy)nitride used in the membrane electrode assembly is used for the electrochemical oxygen reduction reaction, water splitting reaction, or nitrogen reduction reaction, for better results.

It is also disclosed a method for the fabrication of a membrane electrode assembly containing the metal(oxy) nitride component comprising the following steps: preparing an electrode skeleton on top of a protonic ceramic material substrate; infiltering a solution of a transition metal oxalate precursor into the electrode skeleton obtained in the previous step; in situ formation of the metal(oxy)nitride phase through a ammonolysis process under a continuous flow of ammonia gas at temperatures lower than or equal to 800°C.

In an embodiment, the protonic ceramic material used in the method is obtained by acetate combustion routes, for better results.

In an embodiment, the protonic ceramic substrate of the method is compacted by a uniaxial and isostatic pressing and a sintering step with a ramp rate of 3°C/min, performed for 8-12h at a temperature of 1300 to 1500°C, for better results.

In an embodiment, the proton ceramic material is used to form the electrode skeleton of the method by its deposition on the protonic ceramic substrate followed by a sintering step with a ramp rate of 3°C/min performed for 8-12h at a temperature of 800 to 1200°C, for better results.

In an embodiment, the ammonolysis process of the method is performed by heating the infiltrated sample obtained in a tubular furnace under a continuous flow of ammonia gas at 650°C for 24h, for better results.

In an embodiment, the transition metal oxalate precursor used in the method comprises a material of composition $XO_\alpha N_\beta$ wherein X is a transition metal element or combination of transition elements, $\alpha$ ranges from 0 to 2 and $\beta$ ranges from 0.01 to 2, for better results.

In an embodiment, the soluble transition metal oxalate precursor used in the method comprises a metal oxalate or mixture of metal oxalates, which is converted to the corresponding nitride or oxynitride phases, using an ammonia containing gas as the gaseous reacting precursor, for better results.

In an embodiment, the soluble transition metal oxalate precursor used in the method is an ammonium transition metal oxalate or mixture of ammonium transition metal oxalates, where these ammonium transition metal oxalate compounds are mono, bis or tris(oxalate) compounds, for better results.

In an embodiment, the ammonolysis reaction temperature used in the method is from 550°C to 800°C, preferably from 550°C to 650°C, for better results.

Furthermore, where the claims recite a composition, it is to be understood that methods of using the material for any of the purposes disclosed herein are included, and methods of making the composition according to any of the methods of making disclosed herein or other methods known in the art are included, unless otherwise indicated or unless it would be evident to one of ordinary skill in the art that a contradiction or inconsistency would arise.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limits of the range.

**References**

[1] L. Malavasi, C.A.J. Fisher, M.S. Islam, Oxide-ion and proton conducting electrolyte materials for clean energy applications: structural and mechanistic features, Chem. Soc. Rev. 39 (2010) 4370-4387. https://doi.org/10.1039/B915141A.

[2] E. Fabbri, A. D'Epifanio, E. Di Bartolomeo, S. Licoccia, E. Traversa, Tailoring the chemical stability of Ba(Ce0.8-xZrx)Y0.2O3-d protonic conductors for Intermediate Temperature Solid Oxide Fuel Cells (IT-SOFCs), Solid State Ionics. 179 (2008) 558-564. https://doi.org/10.1016/j.ssi.2008.04.002.

[3] D.J.L. Brett, A. Atkinson, N.P. Brandon, S.J. Skinner, Intermediate temperature solid oxide fuel cells, Chem. Soc. Rev. 37 (2008) 1568-1578. https://doi.org/10.1039/B612060C.

[4] M. Liu, M.E. Lynch, K. Blinn, F.M. Alamgir, Y. Choi, Rational SOFC material design: new advances and tools, Materials Today. 14 (2011) 534-546. https://doi.org/http://dx.doi.org/10.1016/51369-7021(11)70279-6.

[5] E. Fabbri, D. Pergolesi, E. Traversa, Materials challenges toward proton-conducting oxide fuel cells: a critical review, Chem. Soc. Rev. 39 (2010) 4355-4369. https://doi.org/10.1039/B902343G.

[6] E. Fabbri, L. Bi, D. Pergolesi, E. Traversa, Towards the Next Generation of Solid Oxide Fuel Cells Operating Below 600 °C with Chemically Stable Proton-Conducting Electrolytes, Advanced Materials. 24 (2012) 195-208. https://doi.org/10.1002/adma.201103102.

[7] E. Fabbri, D. Pergolesi, E. Traversa, Electrode materials: a challenge for the exploitation of protonic solid oxide fuel cells, Science and Technology of Advanced Materials. 11 (2010) 44301. https://doi.org/10.1088/1468-6996/11/4/044301.

[8] W.G. Coors, D.W. Readey, Proton Conductivity Measurements in Yttrium Barium Cerate by Impedance Spectroscopy, Journal of the American Ceramic Society. 40 (2002) 2637-2640. https://doi.org/10.1111/j.1151-2916.2002.tb00507.x.

[9] G. Ma, T. Shimura, H. Iwahara, Simultaneous doping with La3+ and Y3+ for Ba2+ - and Ce4+ -sites in BaCeO3 and the ionic conduction, Solid State Ionics. 120 (1999) 51-60. https://doi.org/10.1016/50167-2738(99)00005-3.

[10] K.D. Kreuer, Th. Dippel, Yu.M. Baikov, J. Maier, Water solubility, proton and oxygen diffusion in acceptor doped BaCeO3: A single crystal analysis, Solid State Ionics. 86-88, Par (1996) 613-620. https://doi.org/http://dx.doi.org/10.1016/0167-2738(96)00221-4.

[11] N. Bonanos, B. Ellis, K.S. Knight, M.N. Mahmood, Ionic conductivity of gadolinium-doped barium cerate perovskites, Solid State Ionics. 35 (1989) 179-188. https://doi.org/http://dx.doi.org/10.1016/0167-2738(89)90028-3.

[12] R.C.T. Slade, N. Singh, The perovskite-type proton-conducting solid electrolyte BaCe0.90Y0.10O3-$\alpha$ in high temperature electrochemical cells, Solid State Ionics. 61 (1993) 111-114. https://doi.org/http://dx.doi.org/10.1016/0167-2738(93)90342-Z.

[13] Y. Yamazaki, R. Hernandez-Sanchez, S.M. Haile, Cation non-stoichiometry in yttrium-doped barium zirconate: phase behavior{,} microstructure{,} and proton conductivity, J. Mater. Chem. 20 (2010) 8158-8166. https://doi.org/10.1039/C0JM02013C.

[14] A. Magrez, T. Schober, Preparation, sintering, and water incorporation of proton conducting Ba0.99Zr0.8Y0.203-$\delta$: comparison between three different synthesis techniques, Solid State Ionics. 175 (2004) 585-588. https://doi.org/http://dx.doi.org/10.1016/j.ssi.2004.03.045.

[15] N. Nasani, P.A.N. Dias, J.A. Saraiva, D.P. Fagg, Synthesis and conductivity of Ba(Ce,Zr,Y)O3-δ electrolytes for PCFCs by new nitrate-free combustion method, International Journal of Hydrogen Energy. 38 (2013) 8461-8470. https://doi.org/http://dx.doi.org/10.1016/j.ijhydene.2013.04.078.

[16] A.K. Azad, A.M. Abdalla, A. Afif, A. Azad, S. Afroze, A.C. Idris, J.-Y. Park, M. Saqib, N. Radenahmad, S. Hossain, I. Bin Elius, Md. Al-Mamun, J. Zaini, A. Al-Hinai, Md.S. Reza, J.T.S. Irvine, Improved mechanical strength, proton conductivity and power density in an 'all-protonic' ceramic fuel cell at intermediate temperature, Sci Rep. 11 (2021) 19382. https://doi.org/10.1038/s41598-021-98987-6.

[17] G.C. Mather, D. Muñoz-Gil, J. Zamudio-Garcia, J.M. Porras-Vázquez, D. Marrero-López, D. Pérez-Coll, Perspectives on Cathodes for Protonic Ceramic Fuel Cells, Applied Sciences 2021, Vol. 11, Page 5363. 11 (2021) 5363. https://doi.org/10.3390/APP11125363.

[18] V.C.D. Graga, L.I. V Holz, A.J.M. Araújo, F.J.A. Loureiro, D.P. Fagg, A novel niobium (oxy)nitride-BaCe0.7Zr0.1Y0.2O3-6 composite electrode for Proton Ceramic Membrane Reactors (PCMRs), J Energy Storage. 68 (2023) 107769. https://doi.org/https://doi.org/10.1016/j.est.2023.107769.

[19] H. Wang, J. Li, K. Li, Y. Lin, J. Chen, L. Gao, V. Nicolosi, X. Xiao, J.M. Lee, Transition metal nitrides for electrochemical energy applications, Chem Soc Rev. 50 (2021) 1354-1390. https://doi.org/10.1039/d0cs00415d.

[20] Q. Luo, C. Lu, L. Liu, M. Zhu, A review on the synthesis of transition metal nitride nanostructures and their energy related applications, Green Energy & Environment. 8 (2023) 406-437. https://doi.org/https://doi.org/10.1016/j.gee.2022.07.002.

[21] P. Patsalas, N. Kalfagiannis, S. Kassavetis, G. Abadias, D. V. Bellas, C. Lekka, E. Lidorikis, Conductive nitrides: Growth principles, optical and electronic properties, and their perspectives in photonics and plasmonics, Materials Science and Engineering R: Reports. 123 (2018) 1-55. https://doi.org/10.1016/j.mser.2017.11.001.

[22] G. Brauer, Nitrides, carbonitrides and oxynitrides of niobium, Journal of the Less Common Metals. 2 (1960) 131-137. https://doi.org/10.1016/0022-5088(60)90008-4.

[23] R. Silva, A. Lopes-Moriyama, C. Araújo, Y. Gomes, C. Souza, Production of Niobium Nitride Via Nitrogen-Based Solid-Gas Reaction, Materials Research. 25 (2022). https://doi.org/10.1590/1980-5373-mr-2022-0189.

[24] G.J.-P. Deblonde, D. Bengio, D. Beltrami, S. Bélair, G. Cote, A. Chagnes, Niobium and tantalum processing in oxalic-nitric media: Nb2O5·nH2O and Ta2O5·nH2O precipitation with oxalates and nitrates recycling, Sep Purif Technol. 226 (2019) 209-217. https://doi.org/https://doi.org/10.1016/j.seppur.2019.05.087.

[25] S. Wang, X. Xu, Y. Bai, Y. Ma, J. Zhang, F. Meng, Z. Jianling, C. Tang, A Novel Route to Synthesize Tantalum Nitride Nanoparticles for Organic Dye Removal Under Visible-Light Irradiation, Sci Adv Mater. 8 (2016) 1020-1027. https://doi.org/10.1166/sam.2016.2688.

[26] A.B. Dongil, Recent Progress on Transition Metal Nitrides Nanoparticles as Heterogeneous Catalysts, Nanomaterials. 9 (2019). https://doi.org/10.3390/NANO9081111.

[27] H. Tang, X. Tian, J. Luo, J. Zeng, Y. Li, H. Song, S. Liao, A Co-doped porous niobium nitride nanogrid as an effective oxygen reduction catalyst, J Mater Chem A Mater. 5 (2017) 14278-14285. https://doi.org/10.1039/C7TA03677A.

[28] S. Tamura, K. Ueno, K. Hato, Niobium oxynitride prepared by thermal NH3 nitridation as a photoanode material for solar water splitting, Mater Res Bull. 112 (2019) 221-225. https://doi.org/10.1016/J.MATERRESBULL.2018.12.001.

[29] R. Kikuchi, T. Kouzaki, T. Kurabuchi, K. Hato, Characterization of Baddeleyite-structure NbON Films Deposited by RF Reactive Sputtering for Solar Hydrogen Production Devices, Electrochemistry. 83 (2015) 711-714. https://doi.org/10.5796/ELECTROCHEMISTRY.83.711.

[30] Y. Abghoui, E. Skúlason, Onset potentials for different reaction mechanisms of nitrogen activation to ammonia on transition metal nitride electro-catalysts, Catal Today. 286 (2017) 69-77. https://doi.org/10.1016/j.cattod.2016.11.047.

[31] Y. Abghoui, A.L. Garden, V.F. Hlynsson, S. Björgvinsdóttir, H. Ólafsdóttir, E. Skúlason, Enabling electrochemical reduction of nitrogen to ammonia at ambient conditions through rational catalyst design, Physical Chemistry Chemical Physics. 17 (2015) 4909-4918. https://doi.org/10.1039/c4cp04838e.

[32] F. Hanifpour, C.P. Canales, E.G. Fridriksson, A. Sveinbjörnsson, T.K. Tryggvason, E. Lewin, F. Magnus, Á.S. Ingason, E. Skúlason, H.D. Flosadóttir, Investigation into the mechanism of electrochemical nitrogen reduction reaction to ammonia using niobium oxynitride thin-film catalysts, Electrochim Acta. 403 (2022) 139551. https://doi.org/10.1016/J.ELECTACTA.2021.139551.

[33] X.J. Wang, F. Krumeich, M. Wörle, R. Nesper, L. Jantsky, H. Fjellvåg, Niobium(V) Oxynitride: Synthesis, Characterization, and Feasibility as Anode Material for Rechargeable Lithium-Ion Batteries, Chemistry- A European Journal. 18 (2012) 5970-5978. https://doi.org/10.1002/CHEM.201102653.

[34] H. Cui, G. Zhu, X. Liu, F. Liu, Y. Xie, C. Yang, T. Lin, H. Gu, F. Huang, H. Cui, G. Zhu, F. Liu, Y. Xie, C. Yang, T. Lin, H.

Gu, F. Huang, X. Liu, Niobium Nitride Nb4N5 as a New High-Performance Electrode Material for Supercapacitors, Advanced Science. 2 (2015) 1500126. https://doi.org/10.1002/ADVS.201500126.

[35] R.S. Ningthoujam, N.S. Gajbhiye, Synthesis, electron transport properties of transition metal nitrides and applications, Prog Mater Sci. 70 (2015) 50-154. https://doi.org/10.1016/J.PMATSCI.2014.11.004.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A ceramic porous electrode for a membrane electrode assembly comprising a metal(oxy)nitride impregnated on the electrode structure.

2. A membrane electrode assembly comprising the ceramic porous electrode of the previous claim.

3. The membrane electrode assembly according to the previous claim, comprising a protonic ceramic material, preferably a protonic ceramic material comprising a material of composition $M_z(Ce_{1-x}Zr_x)_{1-y}R_yO_{3-\delta}$,

   wherein M and R are independently selected from each other;
   wherein M is a divalent alkaline earth element, such as $Ba^{2+}$, $Sr^{2+}$ or $Ca^{2+}$, or their combination;
   wherein R is selected from a list consisting of $Y^{3+}$, $La^{3+}$, $Pr^{3+}$, $Nd^{3+}$, $Sm^{3+}$, $Eu^{3+}$, $Gd^{3+}$, $Dy^{3+}$, $Yb^{3+}$ or their combination;
   x ranges from 0 to 1;
   y ranges from 0 to 0.5;
   z ranges from 0.9 and 1;
   $\delta$ ranges from 0 and 0.25.

4. The membrane electrode assembly according to the previous claims 2 to 3, wherein the protonic ceramic material comprises sintering additives of nickel, zinc, cobalt or copper oxides at concentrations less than or equal to 5 mol%.

5. The membrane electrode assembly according to the previous claims 2 to 4, wherein the protonic ceramic material is combined with the transition metal(oxy)nitride.

6. The membrane electrode assembly according to the previous claims 2 to 5, wherein the protonic ceramic material is in form of a powder, preferably with a particle size from 100nm to $2\mu m$, more preferably from $0.5\mu m$ to $1\mu m$.

7. The membrane electrode assembly according to the previous claims 2 to 6, wherein the metal(oxy)nitride is used for the electrochemical oxygen reduction reaction, water splitting reaction, or nitrogen reduction reaction.

8. A method for the obtention of a membrane electrode assembly containing the metal(oxy)nitride component described in the previous claims comprising the following steps:

   preparing an electrode skeleton on top of a protonic ceramic material substrate;
   infiltrating a solution of a transition metal oxalate precursor into the electrode skeleton obtained in the previous step;
   in situ formation of the metal(oxy)nitride phase through an ammonolysis process under a continuous flow of ammonia gas at temperatures lower than or equal to 800°C.

9. The method according to the previous claim, wherein the protonic ceramic substrate is obtained by acetate combustion routes followed by a uniaxial and isostatic pressing and a sintering step with a ramp rate of 3°C/min, performed for 8-12h at a temperature of 1300 to 1500°C.

10. The method according to any of the previous claims 8 to 9, wherein the proton ceramic material is also used to form the electrode skeleton of the method.

11. The method according to any of the previous claims 8 to 10, wherein the ammonolysis process is performed by heating the infiltrated sample obtained in a tubular furnace under a continuous flow of ammonia gas at 650°C for 24h.

12. The method according to any of the previous claims 8 to 11, wherein the transition metal oxalate precursor comprises a material of composition $XO_\alpha N_\beta$ wherein X is a transition metal element or combination of transition elements

   $\alpha$ ranges from 0 to 2;
   $\beta$ ranges from 0.01 to 2.

13. The method according to any of the previous claims 8 to 12, wherein the soluble transition metal oxalate precursor comprises a metal oxalate or mixture of metal oxalates to the corresponding nitride or oxynitride phases, using an ammonia containing gas as the gaseous reacting precursor.

14. The method according to any of the previous claims 8 to 13, wherein the soluble transition metal oxalate precursor is an ammonium transition metal oxalate or mixture of ammonium transition metal oxalates, where these ammonium transition metal oxalate compounds are mono, bis or tris(oxalate) compounds.

15. The method according to any of the previous claims 8 to 14, wherein the ammonolysis reaction temperature is from 550°C to 800°C, preferably from 550°C to 650°C.

**Fig. 1**

**Fig. 2**

**Fig. 3**

BaCe$_{0.8}$Y$_{0.2}$O$_{3-\delta}$ porous skeleton

BaCe$_{0.8}$Y$_{0.2}$O$_{3-\delta}$ electrolyte

50 μm

7 μm

Infiltrated Nb(N,O) formed by in-situ ammonolysis 650ºC 24h, (dark color)

**Fig. 4**

**Fig. 5**

**Fig. 6**

Europäisches
Patentamt

European
Patent Office

Office européen
des brevets

## EUROPEAN SEARCH REPORT

Application Number

EP 23 18 2775

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/214106 A1 (JOHNSON LONNIE G [US] ET AL) 27 July 2017 (2017-07-27) | 1,2 | INV.<br>H01M4/86 |
| Y | * paragraphs [0038], [0039] *<br>* claims 1, 11-13 *<br>- - - - - | 3-15 | H01M4/88<br>H01M4/90 |
| X | LUO QIAO ET AL: "A review on the synthesis of transition metal nitride nanostructures and their energy related applications",<br>GREEN ENERGY & ENVIRONMENT,<br>vol. 8, no. 2, 1 April 2023 (2023-04-01), pages 406-437, XP093097651,<br>ISSN: 2468-0257, DOI:<br>10.1016/j.gee.2022.07.002 | 1,2 | ADD.<br>H01M8/12 |
| Y | * abstract *<br>* figures 1-3, 8-10, 13 *<br>* Chapters 2.2.1, 2.2.2, 3.2 *<br>- - - - - | 3-15 | |
| X | WANG HAO ET AL: "Transition metal nitrides for electrochemical energy applications",<br>CHEMICAL SOCIETY REVIEWS,<br>vol. 50, no. 2,<br>9 December 2020 (2020-12-09), pages 1354-1390, XP093230696,<br>UK<br>ISSN: 0306-0012, DOI: 10.1039/D0CS00415D<br>Retrieved from the Internet:<br>URL:https://pubs.rsc.org/en/content/articlepdf/2021/cs/d0cs00415d> | 1,2 | **TECHNICAL FIELDS SEARCHED (IPC)**<br><br>H01M |
| Y | * abstract *<br>* figure 6 *<br>* Chapters 2.4, 4.1-4.8 *<br>- - - - - | 3-15 | |

-/--

The present search report has been drawn up for all claims

| Place of search | Date of completion of the search | Examiner |
|---|---|---|
| Munich | 4 December 2024 | Perednis, Dainius |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
  ........................................................................
& : member of the same patent family, corresponding
   document

EPO FORM 1503 03.82 (P04C01)

page 1 of 2

| Europäisches Patentamt European Patent Office Office européen des brevets | **EUROPEAN SEARCH REPORT** | Application Number EP 23 18 2775 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | GRAÇA VANESSA C.D. ET AL: "A novel niobium (oxy)nitride-BaCe0.7Zr0.1Y0.2O3-[delta] composite electrode for Proton Ceramic Membrane Reactors (PCMRs)", JOURNAL OF ENERGY STORAGE, vol. 68, 25 May 2023 (2023-05-25), page 107769, XP093230537, NL ISSN: 2352-152X, DOI: 10.1016/j.est.2023.107769 Retrieved from the Internet: URL:https://pdf.sciencedirectassets.com/308665/1-s2.0-S2352152X23X00103/1-s2.0-S2352152X23011660/main.pdf?hash=52c9d244c604c5d9d1d3024564bbcc70201ef4b305d907d6010c38fd0e45b58f&host=68042c943591013ac2b2430a89b270f6af2c76d8dfd086a07176afe7c76c2c61&pii=S2352152X23011660&tid=spdf-7f7236fd-454b-4111-b929-d13> * abstract * * figures 1, 4, 11 * * Chapter "2. Experimental" * * Chapter "3. Results and discussion" * | 1-15 | |
| Y | EP 3 945 141 A1 (TOYOTA MOTOR CO LTD [JP] ET AL.) 2 February 2022 (2022-02-02) * claims 1, 10-12 * * paragraphs [0024] - [0026], [0030], [0039] - [0042], [0051] * | 1-15 | |
| Y | US 10 014 529 B2 (COLORADO SCHOOL OF MINES [US]) 3 July 2018 (2018-07-03) * claims 1-20 * * figure 12 * * example 1 * | 1-15 | TECHNICAL FIELDS SEARCHED (IPC) |

The present search report has been drawn up for all claims

| Place of search | Date of completion of the search | Examiner |
| --- | --- | --- |
| Munich | 4 December 2024 | Perednis, Dainius |

EPO FORM 1503 03.82 (P04C01)

page 2 of 2

## ANNEX TO THE EUROPEAN SEARCH REPORT
## ON EUROPEAN PATENT APPLICATION NO.

EP 23 18 2775

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2024

| Patent document cited in search report | | Publication date | Patent family member(s) | | Publication date |
|---|---|---|---|---|---|
| US 2017214106 | A1 | 27-07-2017 | CN | 109075412 A | 21-12-2018 |
| | | | CN | 112164768 A | 01-01-2021 |
| | | | DK | 3405991 T3 | 18-05-2020 |
| | | | DK | 3611791 T3 | 01-11-2021 |
| | | | EP | 3405991 A1 | 28-11-2018 |
| | | | EP | 3611791 A2 | 19-02-2020 |
| | | | EP | 3940875 A1 | 19-01-2022 |
| | | | JP | 6630833 B2 | 15-01-2020 |
| | | | JP | 2019503059 A | 31-01-2019 |
| | | | KR | 20180104078 A | 19-09-2018 |
| | | | US | RE49205 E | 06-09-2022 |
| | | | US | 2017214106 A1 | 27-07-2017 |
| | | | WO | 2017127485 A1 | 27-07-2017 |
| EP 3945141 | A1 | 02-02-2022 | NONE | | |
| US 10014529 | B2 | 03-07-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. MALAVASI ; C.A.J. FISHER ; M.S. ISLAM.** Oxide-ion and proton conducting electrolyte materials for clean energy applications: structural and mechanistic features. *Chem. Soc. Rev.*, 2010, vol. 39, 4370-4387, https://doi.org/10.1039/B915141A

- **E. FABBRI ; A. D'EPIFANIO ; E. DI BARTOLOMEO ; S. LICOCCIA ; E. TRAVERSA.** Tailoring the chemical stability of Ba(Ce0.8-xZrx)Y0.2O3-d protonic conductors for Intermediate Temperature Solid Oxide Fuel Cells (IT-SOFCs). *Solid State Ionics*, 2008, vol. 179, 558-564, https://doi.org/10.1016/j.ssi.2008.04.002

- **D.J.L. BRETT ; A. ATKINSON ; N.P. BRANDON ; S.J. SKINNER.** Intermediate temperature solid oxide fuel cells. *Chem. Soc. Rev.*, 2008, vol. 37, 1568-1578, https://doi.org/10.1039/B612060C

- **M. LIU ; M.E. LYNCH ; K. BLINN ; F.M. ALAMGIR ; Y. CHOI.** Rational SOFC material design: new advances and tools. *Materials Today*, 2011, vol. 14, 534-546, https://doi.org/http://dx.doi.org/10.1016/51369-7021(11)70279-6

- **E. FABBRI ; D. PERGOLESI ; E. TRAVERSA.** Materials challenges toward proton-conducting oxide fuel cells: a critical review. *Chem. Soc. Rev.*, 2010, vol. 39, 4355-4369, https://doi.org/10.1039/B902343G

- **E. FABBRI ; L. BI ; D. PERGOLESI ; E. TRAVERSA.** Towards the Next Generation of Solid Oxide Fuel Cells Operating Below 600 °C with Chemically Stable Proton-Conducting Electrolytes. *Advanced Materials*, 2012, vol. 24, 195-208, https://doi.org/10.1002/adma.201103102

- **E. FABBRI ; D. PERGOLESI ; E. TRAVERSA.** Electrode materials: a challenge for the exploitation of protonic solid oxide fuel cells. *Science and Technology of Advanced Materials*, 2010, vol. 11, 44301, https://doi.org/10.1088/1468-6996/11/4/044301

- **W.G. COORS ; D.W. READEY.** Proton Conductivity Measurements in Yttrium Barium Cerate by Impedance Spectroscopy. *Journal of the American Ceramic Society*, 2002, vol. 40, 2637-2640, https://doi.org/10.1111/j.1151-2916.2002.tb00507.x

- **G. MA ; T. SHIMURA ; H. IWAHARA.** Simultaneous doping with La3+ and Y3+ for Ba2+ - and Ce4+ -sites in BaCeO3 and the ionic conduction. *Solid State Ionics*, 1999, vol. 120, 51-60, https://doi.org/10.1016/50167-2738(99)00005-3

- **K.D. KREUER ; TH. DIPPEL ; YU.M. BAIKOV ; J. MAIER.** Water solubility, proton and oxygen diffusion in acceptor doped BaCeO3: A single crystal analysis. *Solid State Ionics*, 1996, vol. 86-88, 613-620, https://doi.org/http://dx.doi.org/10.1016/0167-2738(96)00221-4

- **N. BONANOS ; B. ELLIS ; K.S. KNIGHT ; M.N. MAHMOOD.** Ionic conductivity of gadolinium-doped barium cerate perovskites. *Solid State Ionics*, 1989, vol. 35, 179-188, https://doi.org/http://dx.doi.org/10.1016/0167-2738(89)90028-3

- **R.C.T. SLADE ; N. SINGH.** The perovskite-type proton-conducting solid electrolyte Ba-Ce0.90Y0.10O3-$\alpha$ in high temperature electrochemical cells. *Solid State Ionics*, 1993, vol. 61, 111-114, https://doi.org/http://dx.doi.org/10.1016/0167-2738(93)90342-Z

- **Y. YAMAZAKI ; R. HERNANDEZ-SANCHEZ ; S.M. HAILE.** Cation non-stoichiometry in yttrium-doped barium zirconate: phase behavior{,} microstructure{,} and proton conductivity. *J. Mater. Chem.*, 2010, vol. 20, 8158-8166, https://doi.org/10.1039/C0JM02013C

- **A. MAGREZ ; T. SCHOBER.** Preparation, sintering, and water incorporation of proton conducting Ba0.99Zr0.8Y0.2O3-$\delta$: comparison between three different synthesis techniques. *Solid State Ionics*, 2004, vol. 175, 585-588, https://doi.org/http://dx.doi.org/10.1016/j.ssi.2004.03.045

- **N. NASANI ; P.A.N. DIAS ; J.A. SARAIVA ; D.P. FAGG.** Synthesis and conductivity of Ba(Ce,Zr,Y)O3-$\delta$ electrolytes for PCFCs by new nitrate-free combustion method. *International Journal of Hydrogen Energy*, 2013, vol. 38, 8461-8470, https://doi.org/http://dx.doi.org/10.1016/j.ijhydene.2013.04.078

- **A.K. AZAD ; A.M. ABDALLA ; A. AFIF ; A. AZAD ; S. AFROZE ; A.C. IDRIS ; J.-Y. PARK ; M. SAQIB ; N. RADENAHMAD ; S. HOSSAIN.** Improved mechanical strength, proton conductivity and power density in an 'all-protonic' ceramic fuel cell at intermediate temperature. *Sci Rep.*, 2021, vol. 11, 19382, https://doi.org/10.1038/s41598-021-98987-6

- **G.C. MATHER ; D. MUÑOZ-GIL ; J. ZAMUDIO-GARCIA ; J.M. PORRAS-VÁZQUEZ ; D. MARRERO-LÓPEZ ; D. PÉREZ-COLL.** Perspectives on Cathodes for Protonic Ceramic Fuel Cells. *Applied Sciences*, 2021, vol. 11 (2021), 5363, https://doi.org/10.3390/APP11125363

- **V.C.D. GRAGA** ; **L.I. V HOLZ** ; **A.J.M. ARAÚJO** ; **F.J.A. LOUREIRO** ; **D.P. FAGG**. A novel niobium (oxy)nitride-BaCe0.7Zr0.1Y0.2O3-6 composite electrode for Proton Ceramic Membrane Reactors (PCMRs). *J Energy Storage*, 2023, vol. 68, 107769, https://doi.org/https://doi.org/10.1016/j.est.2023.107769
- **H. WANG** ; **J. LI** ; **K. LI** ; **Y. LIN** ; **J. CHEN** ; **L. GAO** ; **V. NICOLOSI** ; **X. XIAO** ; **J.M. LEE**. Transition metal nitrides for electrochemical energy applications. *Chem Soc Rev.*, 2021, vol. 50, 1354-1390, https://doi.org/10.1039/d0cs00415d
- **Q. LUO** ; **C. LU** ; **L. LIU** ; **M. ZHU**. A review on the synthesis of transition metal nitride nanostructures and their energy related applications. *Green Energy & Environment.*, 2023, vol. 8, 406-437, https://doi.org/https://doi.org/10.1016/j.gee.2022.07.002
- **P. PATSALAS** ; **N. KALFAGIANNIS** ; **S. KASSAVE-TIS** ; **G. ABADIAS** ; **D. V. BELLAS** ; **C. LEKKA** ; **E. LIDORIKIS**. Conductive nitrides: Growth principles, optical and electronic properties, and their perspectives in photonics and plasmonics. *Materials Science and Engineering R: Reports*, 2018, vol. 123, 1-55, https://doi.org/10.1016/j.mser.2017.11.001
- **G. BRAUER**. Nitrides, carbonitrides and oxynitrides of niobium. *Journal of the Less Common Metals*, 1960, vol. 2, 131-137, https://doi.org/10.1016/0022-5088(60)90008-4
- **R. SILVA** ; **A. LOPES-MORIYAMA** ; **C. ARAÚJO** ; **Y. GOMES** ; **C. SOUZA**. Production of Niobium Nitride Via Nitrogen-Based Solid-Gas Reaction. *Materials Research*, 2022, vol. 25, https://doi.org/10.1590/1980-5373-mr-2022-0189
- **G.J.-P. DEBLONDE** ; **D. BENGIO** ; **D. BELTRAMI** ; **S. BÉLAIR** ; **G. COTE** ; **A. CHAGNES**. Niobium and tantalum processing in oxalic-nitric media: Nb2O5·n-H2O and Ta2O5·nH2O precipitation with oxalates and nitrates recycling. *Sep Purif Technol.*, 2019, vol. 226, 209-217, https://doi.org/https://doi.org/10.1016/j.seppur.2019.05.087
- **S. WANG** ; **X. XU** ; **Y. BAI** ; **Y. MA** ; **J. ZHANG** ; **F. MENG** ; **Z. JIANLING** ; **C. TANG**. A Novel Route to Synthesize Tantalum Nitride Nanoparticles for Organic Dye Removal Under Visible-Light Irradiation. *Sci Adv Mater.*, 2016, vol. 8, 1020-1027, https://doi.org/10.1166/sam.2016.2688
- **A.B. DONGIL**. Recent Progress on Transition Metal Nitrides Nanoparticles as Heterogeneous Catalysts. *Nanomaterials*, 2019, vol. 9, https://doi.org/10.3390/-NANO9081111
- **H. TANG** ; **X. TIAN** ; **J. LUO** ; **J. ZENG** ; **Y. LI** ; **H. SONG** ; **S. LIAO**. A Co-doped porous niobium nitride nanogrid as an effective oxygen reduction catalyst. *J Mater Chem A Mater.*, 2017, vol. 5, 14278-14285, https://doi.org/10.1039/C7TA03677A
- **S. TAMURA** ; **K. UENO** ; **K. HATO**. Niobium oxynitride prepared by thermal NH3 nitridation as a photoanode material for solar water splitting. *Mater Res Bull.*, 2019, vol. 112, 221-225, https://doi.org/10.1016/J.MATERRESBULL.2018.12.001
- **R. KIKUCHI** ; **T. KOUZAKI** ; **T. KURABUCHI** ; **K. HATO**. Characterization of Baddeleyite-structure NbON Films Deposited by RF Reactive Sputtering for Solar Hydrogen Production Devices. *Electrochemistry*, 2015, vol. 83, 711-714, https://doi.org/10.5796/ELECTROCHEMISTRY.83.711
- **Y. ABGHOUI** ; **E. SKÚLASON**. Onset potentials for different reaction mechanisms of nitrogen activation to ammonia on transition metal nitride electrocatalysts. *Catal Today.*, 2017, vol. 286, 69-77, https://doi.org/10.1016/j.cattod.2016.11.047
- **Y. ABGHOUI** ; **A.L. GARDEN** ; **V.F. HLYNSSON** ; **S. BJÖRGVINSDÓTTIR** ; **H. ÓLAFSDÓTTIR** ; **E. SKÚLASON**. Enabling electrochemical reduction of nitrogen to ammonia at ambient conditions through rational catalyst design. *Physical Chemistry Chemical Physics*, 2015, vol. 17, 4909-4918, https://doi.org/10.1039/c4cp04838e
- **F. HANIFPOUR** ; **C.P. CANALES** ; **E.G. FRIDRIKS-SON** ; **A. SVEINBJÖRNSSON** ; **T.K. TRYGGVA-SON** ; **E. LEWIN** ; **F. MAGNUS** ; **Á.S. INGASON** ; **E. SKÚLASON** ; **H.D. FLOSADÓTTIR**. Investigation into the mechanism of electrochemical nitrogen reduction reaction to ammonia using niobium oxynitride thin-film catalysts. *Electrochim Acta.*, 2022, vol. 403, 139551, https://doi.org/10.1016/J.ELECTAC-TA.2021.139551
- **X.J. WANG** ; **F. KRUMEICH** ; **M. WÖRLE** ; **R. NESPER** ; **L. JANTSKY** ; **H. FJELLVÅG**. Niobium(V) Oxynitride: Synthesis, Characterization, and Feasibility as Anode Material for Rechargeable Lithium-Ion Batteries. *Chemistry- A European Journal*, 2012, vol. 18, 5970-5978, https://doi.org/10.1002/-CHEM.201102653
- **H. CUI** ; **G. ZHU** ; **X. LIU** ; **F. LIU** ; **Y. XIE** ; **C. YANG** ; **T. LIN** ; **H. GU** ; **F. HUANG** ; **H. CUI**. Niobium Nitride Nb4N5 as a New High-Performance Electrode Material for Supercapacitors. *Advanced Science*, 2015, vol. 2, 1500126, https://doi.org/10.1002/ADVS.201500126
- **R.S. NINGTHOUJAM** ; **N.S. GAJBHIYE**. Synthesis, electron transport properties of transition metal nitrides and applications. *Prog Mater Sci.*, 2015, vol. 70, 50-154, https://doi.org/10.1016/J.PMATS-CI.2014.11.004